(19) Europäisches Patentamt / European Patent Office / Office européen des brevets

(11) **EP 3 491 077 B1**

(12) **EUROPEAN PATENT SPECIFICATION**

(45) Date of publication and mention of the grant of the patent:
**26.02.2020 Bulletin 2020/09**

(21) Application number: **17734101.3**

(22) Date of filing: **03.07.2017**

(51) Int Cl.:
***C09D 5/16*** (2006.01)

(86) International application number:
**PCT/EP2017/066478**

(87) International publication number:
**WO 2018/019519 (01.02.2018 Gazette 2018/05)**

(54) **SURFACE TREATMENT COMPOSITION CAPABLE OF IMPARTING UNDERWATER SUPEROLEOPHOBICITY**

OBERFLÄCHENBEHANDLUNGSZUSAMMENSETZUNG, DIE ZUR VERLEIHUNG VON UNTERWASSERSUPEROLEOPHOBIZITÄT IN DER LAGE IST

COMPOSITION DE TRAITEMENT DE SURFACE CAPABLE DE CONFÉRER UNE SUPEROLÉOPHOBICITÉ SOUS-MARINE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.07.2016 EP 16181276**

(43) Date of publication of application:
**05.06.2019 Bulletin 2019/23**

(73) Proprietors:
• **Unilever N.V.**
**3013 AL Rotterdam (NL)**
Designated Contracting States:
**AL AT BE BG CH CZ DE DK EE ES FI FR GR HR HU IS IT LI LT LU LV MC MK NL NO PL PT RO RS SE SI SK SM TR**
• **Unilever PLC**
**London, Greater London EC4Y 0DY (GB)**
Designated Contracting States:
**CY GB IE MT**

(72) Inventors:
• **DAS, Somnath**
**Bangalore 560066 (IN)**
• **MAHENDRAN, Divya**
**Kollam**
**Kerala 691601 (IN)**
• **VAIDYA, Ashish,Anant**
**Bangalore 560066 (IN)**

(74) Representative: **Tansley, Sally Elizabeth**
**Unilever N.V.**
**Unilever Patent Group**
**Olivier van Noortlaan 120**
**3133 AT Vlaardingen (NL)**

(56) References cited:
**WO-A1-2006/045713      US-A1- 2011 084 421**

**Description**

**Technical Field of the Invention**

The present invention relates to a surface treatment composition that can be used to impart underwater superoleophobicity to surfaces by treating such surfaces with said surface treatment composition. The surface treatment composition of the present invention contains functionalized micro/nanoparticles that carry a plurality of covalently bound silane polymer residues on the surface.

**Summary of the Invention**

A liquid droplet in contact with a flat, solid surface does so with a contact angle characteristic of both the liquid and the solid in question according to the Young's equation:

$$\gamma_{SG} - \gamma_{SL} - \gamma_{LG}\cos\theta_c = 0$$

where $\gamma_{SG}$, $\gamma_{SL}$, and $\gamma_{LG}$ are the solid-vapor, solid-liquid, and liquid-vapor surface tensions respectively, and $\theta$ is the contact angle of the droplet.

The solid-liquid interactions can be enhanced through the use of surface roughness. Increasing the surface area in contact with the droplet leads to amplification of the solid-liquid interaction, repellent surfaces therefore become more repellent or liquids spread further on non-repellent surfaces. This assumes that the surface is fully wetted by the liquid and is known as the "Wenzel regime". Another scenario when considering droplets on rough surfaces is that air pockets become trapped between the surface and the liquid resulting in a composite interface known as the "Cassie-Baxter regime". In this case the surface typically becomes more repellent since the droplet is resting partially on air pockets. Therefore, it is possible for non-repellent surfaces to become repellent through an increase in roughness and the formation of a composite air/solid interface.

Superoleophobic surfaces are of interest for anti-fouling, self-cleaning, anti-smudge, low-drag, anti-fog, and oil-water separation applications. Current bioinspired surfaces are of limited use due to a lack of mechanical durability.

Many examples of superoleophobic surfaces exist; these typically involve a fluorinated component to provide the low surface tension and a roughness component to enhance the liquid-solid interactions. An early example used rough, oxidized aluminium surfaces immersed in fluorinated monoalkylphosphate;; resulting in oil and water contact angles of 150°. A fluorinated polyhedral oligomeric silsesquioxane has been used in various scenarios - including electrospinning and coating re-entrant structures - to create a superoleophobic coating. However, a superoleophobic surface with good mechanical durability typically has not been demonstrated. Poor durability can be due to the "one-pot" technique typically utilized, where the low surface tension material required for oleophobicity is distributed throughout the coating, compromising adhesion to the substrate.

Superoleophobic composite surfaces are typically superhydrophobic as well; a surface that repels oil usually also repels water since water has a higher surface tension.

Ghosh et al. (Surface Chemical Modification of Poly(dimethylsiloxane)-Based Biomimetic Materials: Oil-Repellent Surfaces; Appl. Mater. Interfaces (2009), 1(11), 2636-2644) describes an experiment in which the oil-repellent performance of a poly(dimethylsiloxane)-based biomimetic replica (PDMS-replica) was tuned by modifying its surface chemical composition. PDMS-replica possessing a complementary combination of hierarchical roughness and mixed -$CF_3$ and -$SiCH_3$ terminal functionality was prepared in the presence of a surface-modifying agent, using nanocasting based on soft lithography. PDMS-replica showed superhydrophobicity and enhanced oil repellency, $\theta_{oil} \sim 86°$. PDMS-replica was further modified with silica nanoparticles followed by chemical vapor deposition of (heptadecafluoro-1,1,2,2-tetrahydrodecyl)trichlorosilane. The -$CF_3$ terminal, silica-modified PDMS-replica (i.e., PDMS-replicasilica/$CF_3$) showed both superhydrophobic and high oil-repellent properties (advancing $\theta_{oil} \sim 120°$).

Ghosh et al. (Water-Based Layer-by-Layer Surface Chemical Modification of Biomimetic Materials: Oil Repellency, Appl. Mater. Interfaces (2013), 5(18), 8869-8874) report surface chemical modification of biomimetic materials through water-based layer-by-layer deposition. An amine terminated biomimetic replica PDMS-replicaSilica/$NH_2$ was prepared by treating silica-modified replica (i.e., PDMS-replicaSilica) with an aqueous solution of branched ethoxylated polyethylenimine (EPEI). Next, -$CF_3$ terminal PDMS-replicaSilica/$NH_2$/$CF_3$ was obtained by treating PDMS-replicaSilica/$NH_2$ with the aqueous solution of phosphate ester fluorosurfactant. PDMS-replicaSilica/$NH_2$/$CF_3$ showed superhydrophobicity (advancing $\theta_{water} \approx 140°$) and high oil repellency (advancing $\theta_{oil} \approx 110°$). X-ray photoelectron spectroscopy (XPS) revealed well-organized terminal -$CF_3$ groups present on the PDMS-replicaSilica/$NH_2$/$CF_3$ surface.

The aforementioned oil repellent surfaces suffer from the drawback that they tend to attract oil or hydrophobic stains when placed under water.

US 2008/0177022 describes a hydrophilic film forming composition comprising:

- an alkylene oxide compound comprising at least 2 hydroxyl groups in the molecule thereof;
- an alkoxide compound comprising an element selected from Si, Ti, Zr and Al; and
- a hydrophilic polymer comprising a silane coupling group at the polymer terminal.

US 2010/0159256 describes a composition for forming a hydrophilic film, comprising:

- a hydrophilic polymer having a silane coupling group at a terminal or on a side chain of the polymer; and
- a metal complex catalyst.

US 2011/0024292 A1 (Armstrong et al) discloses a composition suitable for use in chromatography. The compositions disclosed in this publication comprise a solid support and/or polymers comprising derivatized cyclofructan compounds. There is no disclosure of compounds/compositions that can impart superoleophobic characteristic and neither there is any disclosure of a composition which contains silane coupled with selected polymers.

US2013296453 AA (Ciba) discloses functionalized $SiO_2$, $Al_2O_3$ or mixed $SiO_2$ and $Al_2O_3$ nanoparticles nanoparticles comprising on the surface a covalently bound radical of radical which is a silane. These functionalized nanoparticles are useful as stabilizers and/or compatibilizers in organic materials, or as photoinitiators in pre-polymeric or pre-crosslinking formulations, or as reinforcer of coatings and improver of scratch resistance in coating compositions for surfaces. There is no disclosure of compounds/compositions that can impart superoleophobic characteristic and neither there is any disclosure of a composition which contains silane coupled with selected polymers as claimed in the present application.

US20110084421 A1 (Soan Labs) discloses plurality of particles configured to impart texture to a surface, and an ultraphobic-inducing composition attached to the plurality of particles, the ultraphobic-inducing composition comprising at least one polyamine segment, with a plurality of branch segments attached to the at least one polyamine segment, the plurality of branch segments including at least one of a hydrophobic segment and an oleophobic segment. The branch segments of the coating composition can be covalently bonded to the at least one polyamine segment, or they may not be covalently bonded to the at least one polyamine segment. The ultraphobic-inducing composition can be attached to the plurality of particles using a multifunctional coupling agent. The multifunctional agent can comprise a functionality group including epoxy, hydroxyl, alkoxyl, or halogen. The multifunctional coupling agent can comprise a silane coupling agent. In embodiments, the ultraphobic-inducing composition can directly contact a surface of the plurality of particles. In embodiments, the at least one polyamine segment of the ultraphobic-inducing composition comprises chitosan.

## Summary of the Invention

The inventors have developed a surface treatment composition that can be used to impart underwater superoleophobicity to surfaces by treating such surfaces with said surface treatment composition.

The surface treatment composition of the present invention contains functionalized micro/nanoparticles, said functionalized micro/nanoparticles comprising a core particle having a diameter in the range of 50-5,000 nm, said core particle carrying a plurality of covalently bound silane polymer residues on the surface. These covalently bound silane polymer residues are represented by formula (I):

$$(-O)_a(R^1O)_b(R^2)_{3-a-b}Si-R^3-X-pol \qquad (I)$$

wherein:

R$^1$ and R$^2$ are each independently selected from hydrogen atom and optionally substituted $C_{1-20}$ alkyl;
R$^3$ is selected from substituted and unsubstituted $C_{1-12}$ alkylenes;
X is a selected from NR$^4$, O, S or P, wherein R$^4$ represent hydrogen atom or $C_{1-3}$ alkyl;
pol is a hydrophilic polymer residue;
a = 1, 2 or 3;
b = 0, 1 or 2; and
a+b ≤ 3

wherein the hydrophilic polymer residue is residue of a polymer selected from polyethylene glycol, polypropylene glycol, polyvinyl alcohol, polyacrylamide, polyoxazoline, polyethyleneimine, acrylic polymers, poly(vinylpyrrolidone), polysaccharides, chitosan and copolymers thereof.

When the surface treatment composition of the present invention is used to treat a surface, e.g. teeth enamel, the functionalized micro/nanoparticles attach themselves to the surface, thereby creating a deposit layer of the functionalized micro/nanoparticles. This deposit layer on the treated surface imparts underwater superoleophobicity to said surface. As a result the treated surface, when placed underwater, effectively repels hydrophobic stains.

The invention also relates to the use of the aforementioned surface treatment composition for imparting underwater superoleophobicity to a surface, for imparting stain repellency to a surface and/or for imparting antimicrobial properties to a surface, said use comprising treating the surface with the treatment composition.

Furthermore, the invention provides a method for preparing the aforementioned functionalized micro/nanoparticles.

## Detailed Description of the Invention

A first aspect of the present invention relates to a surface treatment composition capable of imparting underwater superoleophobicity to surfaces, said surface treatment containing functionalized micro/nanoparticles, said functionalized micro/nanoparticles comprising a core particle having a diameter in the range of 50-5,000 nm, said core particle carrying a plurality of covalently bound silane polymer residues on the surface, wherein these covalently bound silane polymer residues are represented by formula (I):

$$(-O)_a(R^1O)_b(R^2)_{3-a-b}Si-R^3-X-pol \qquad (I)$$

wherein:

R$^1$ and R$^2$ are each independently selected from hydrogen atom and optionally substituted $C_{1-20}$ alkyl;
R$^3$ is selected from substituted and unsubstituted $C_{1-12}$ alkylenes;
X is a selected from NR$^4$, O, S or P, wherein R$^4$ represent hydrogen atom or $C_{1-3}$ alkyl;
pol is a hydrophilic polymer residue;
a = 1, 2 or 3;
b = 0, 1 or 2; and
$a+b \leq 3$

wherein the hydrophilic polymer residue is residue of a polymer selected from polyethylene glycol, polypropylene glycol, polyvinyl alcohol, polyacrylamide, polyoxazoline, polyethyleneimine, acrylic polymers, poly(vinylpyrrolidone), polysaccharides, chitosan and copolymers thereof.

The term "diameter" as used herein in relation to a particle, unless indicated otherwise, refers to the average equivalent spherical diameter of said particle. Particle size distribution of a particular material can be determined, for instance, by means of laser diffraction. Care should be taken that loose aggregates of particles are dissociated before the particle size measurement. Particle size can be measured using SEM or dynamic light scattering or the commercially available particle size analyzers from eg, Malvern or Brookhaven.

The hydrophilic polymer residue on the surface of the functionalized micro/nanoparticles is a residue of a polymer selected from polyethylene glycol, polypropylene glycol, polyvinyl alcohol, polyacrylamide, polyoxazoline, polyethyleneimine, acrylic polymers, poly(vinylpyrrolidone), polysaccharides, chitosan and copolymers thereof. More preferably, the hydrophilic polymer residue is a residue of a polymer selected from polyethylene glycol, polypropylene glycol and copolymers thereof. Most preferably, the polymer residue is polyethylene glycol residue.

Typically, the hydrophyilic polymer residue has a degree of polymerization of more than 3 (n>3), more preferably a degree of polymerization of more than 10 (n>10) and most preferably a degree of polymerization of more than 20 (n>20); "n" being the number of monomeric units.

R$^1$ in formula (I) is preferably selected from hydrogen atom and optionally substituted $C_{1-5}$ alkyl. More preferably, R$^1$ is selected from hydrogen atom, methyl, ethyl, n-propyl and iso-propyl. Most preferably R$^1$ is selected from hydrogen atom, methyl and ethyl.

R$^2$ in formula (I) is preferably selected from hydrogen atom and optionally substituted $C_{1-5}$ alkyl. More preferably, R$^2$ is selected from hydrogen atom, methyl, ethyl, n-propyl and iso-propyl. Most preferably R$^2$ is selected from hydrogen atom, methyl and ethyl.

Preferably, R$^3$ in formula (i) is selected from substituted and unsubstituted $C_{1-5}$ alkylenes, more preferably from unsubstituted $C_{1-5}$ alkylenes, most preferably from unsubtituted $C_{2-4}$ alkylenes. X in formula (I) preferably represents NR$^4$ or O. More preferably X represent NR$^4$, wherein R$^4$ represent hydrogen atom or $C_{1-3}$ alkyl. Most preferably, X represents NH.

In another preferred embodiment, the integers a and b in formula (I) meet the condition: $a+b \geq 2$. Most preferably $a+b = 3$.

The core particle in the functionalized micro/nanoparticles may be made of inorganic and/or organic material. Preferably, the core particle is made of inorganic material. More preferably, the core particle is made of silica, calcium carbonate, zinc oxide, titanium dioxide, hydrotalcite or hydroxyapatite. Even more preferably, the core particles is made of silica or hydroxyapatite. Most preferably, the core particle is made of silica.

The core particle preferably has a diameter in the range of 100 to 5000 nm, more preferably in the range of 150 to 4000 nm and most preferably in the range of 200 to 2000 nm.

In accordance with a particularly preferred embodiment, at least 50% of the surface of the core particle of the functionalized micro/nanoparticles is covered with the covalently bound silane polymer residues.

The surface treatment composition of the present invention may be provided in different forms, such as a paste, a gel, a liquid or a powder. Preferably, the surface treatment composition is in the form of a paste, a gel or a liquid. More preferably, the surface treatment composition is in the form of a paste or a gel. Most preferably, the composition is in the form of a paste.

The surface treatment composition typically contains 0.1-45 wt.% of the functionalized micro/nanoparticles. More preferably, the composition contains 0.5 to 40 wt/%, even more preferably 1 to 30 wt.% and most preferably 5 to 20 wt.% of the functionalized micro/nanoparticles.

According to a particularly preferred embodiment, the functionalized micro/nanoparticles are homogeneously dispersed throughout the surface treatment composition. In order to ensure that the functionalized micro/nanoparticles remain suspended in liquid-based formulations gelling agents, structuring agents and viscosifiers may suitably be employed.

Examples of surface treatment compositions encompassed by the present invention toothpastes, tooth powders, mouthwashes, hard surface cleaning compositions, toilet cleaning compositions and household cleaning compositions. According to a preferred embodiment, the surface treatment composition is a toothpaste, a tooth powder or a mouthwash. Most preferably, the surface treatment composition is a toothpaste.

Besides the functionalized micro/nanoparticles, the toothpaste may suitably contain one or more other ingredients selected from abrasives (e.g. particles of aluminum hydroxide ($Al(OH)_3$), calcium carbonate ($CaCO_3$), various calcium hydrogen phosphates, various silicas and zeolites, and hydroxyapatite ($Ca_5(PO_4)_3OH$).), fluorides (e.g. NaF, $SnF_2$, $Na_2PO_3F$), surfactants (e.g. sodium lauryl sulfate), antibacterial agents ($ZnCl_2$), flavourants (e.g. peppermint, spearmint or wintergreen) and remineralizers (hydroxyapatite nanocrystals and calcium phosphates). Preferably, the toothpaste contains at least two, more preferably at least three and most preferably at least four of the aforementioned ingredients.

Another aspect of the present invention relates to a method of preparing functionalized micro/nanoparticles as defined herein, said method comprising:

- providing a core particle having a diameter in the range of 50-5,000 nm; and
- covalently binding reactive hydrophilic polymer to the core particle by means of a silane coupling agent to produce a core particle carrying a plurality of covalently bound silane polymer residues on the surface.

The core particle may be made of inorganic and/or organic material. Preferably, the core particle is made of inorganic material. More preferably, the core particle is made of silica, calcium carbonate, zinc oxide, titanium dioxide, hydrotalcite or hydroxyapatite. Even more preferably, the core particles is made of silica or hydroxyapatite. Most preferably, the core particle is made of silica.

The core particle preferably has a diameter in the range of 100 to 5000 nm, more preferably in the range of 150 to 4000 nm and most preferably in the range of 200 to 2000 nm.

In the present method preferably at least 50% of the surface of the core particle is covered with the covalently bound silane polymer residues.

In the present method the silane coupling agent is employed to covalently link the reactive hydrophilic polymer to the surface of the core particle. To this end the silane coupling agent contains at least one reactive group that is capable of reacting with reactive groups on the surface of the core particle under the formation of the a covalent bond. In addition, the silane coupling agent contains at least one other reactive group that is capable of reacting with a reactive group in the hydrophilic polymer under the formation of a covalent bond.

According to a particularly preferred embodiment, the silane coupling agent employed in the present method is represented by the following formula (II):

$$(R^1O)_i(R^2)_{3-i}Si\text{-}R^3\text{-}Y \qquad (II)$$

wherein:

R$^1$, R$^2$ and R$^3$ have the meaning as defined herein before;

Y is a reactive group selected from vinyl, alkene, epoxy, amine and mercapto; and
i = 1, 2 or 3.

The residues $R^1O-$ in formula (II) are capable of reacting with reactive groups on the surface of the core particles. Examples of such reactive groups include hydroxyl (SiOH and -CHOH, $CH_2OH$), and silicon hydride (-SiH).

The reactive group Y in formula (II) is capable of reacting with a reactive group in the reactive hydrophilic polymer. Preferably, the reactive group Y in formula (II) is selected from epoxy and amine. More preferably, the reactive group Y is an amine group, most preferably a primary amine group.

The reactive hydrophilic polymer employed in the present method preferably contains one or more reactive groups selected from a hydroxyl, epoxy, thiol, vinyl and chlorohydroxy, More preferably, the reactive hydrophilic polymer contains one or more reactive groups selected from thiol, epoxy and amine. Most preferably, the reactive hydrophilic polymer contains a reactive group in the form of an epoxy residue.

According to a particularly preferred embodiment, the reactive group of the reactive hydrophilic polymer is a terminal group, e.g. a terminal epoxy group.

In one embodiment of the present method the reactive hydrophilic polymer is covalently bound to the core particle by first covalently binding the silane coupling agent to the surface of the core particle, followed by covalently binding the reactive hydrophilic polymer to the surface bound residues of the silane coupling agent. In accordance with this embodiment, the method comprises the steps of:

- pre-treating the core particle with a first solution containing the silane coupling agent and allowing reactive groups on the surface of the core particle to react with the silane coupling agent to covalently bind the silane coupling agent to the surface of the core particle; and
- treating the pretreated core particle with a second solution containing the reactive hydrophilic polymer to covalently bind the hydrophilic polymer to the silane coupling agent residues on the surface of the core particle.

In an alternative embodiment of the present method first the reactive hydrophilic polymer and the silane coupling agent are reacted to produce a reactive silane polymer conjugate and next the reactive silane polymer conjugate is covalently bound to the core particle. In accordance with this embodiment, the method comprises the steps of:

- preparing a reactive silane polymer conjugate by reacting the reactive hydrophilic polymer with the silane coupling agent;
- treating the core particle with a solution containing the reactive silane polymer conjugate to covalently bind said conjugate to the surface of the core particle.
- pre-treating the core particle with a first solution containing the silane coupling agent and allowing reactive groups on the surface of the core particle to react with the silane coupling agent to covalently bind the silane coupling agent to the surface of the core particle; and
- treating the pretreated core particle with a second solution containing the reactive hydrophilic polymer to covalently bind the hydrophilic polymer to the silane coupling agent residues on the surface of the core particle.

Yet another aspect of the present invention relates to the use of the surface treatment composition of the present invention for imparting underwater superoleophobicity, for imparting stain repellency to a surface and/or for imparting antimicrobial properties to a surface, said use comprising treating said surface with the surface treatment composition.

In accordance with a particularly preferred embodiment, the surface that is to be treated with the surface treatment composition is primarily (>50 wt.%) composed of apatite, ceramic, marble or metal. More preferably, said surface is composed of apatite, ceramic or marble. Even more preferably, the surface is composed of apatite, most preferably of hydroxyapatite. Hydroxyapatite is the primary component of tooth enamel.

A particularly preferred embodiment of the present use comprises the application of the surface treatment composition onto the teeth of a human, most preferably using a tooth brush.

According to another particularly preferred embodiment, the surface that is treated with the surface treatment composition of the present invention is subjected to a surface roughening treatment before the treatment with the surface treatment composition. The inventors have found that such a pretreatment can substantially enhance the effectiveness of the treatment with the surface treatment compositions. Etching is an example of a surface roughening treatment that may suitably be employed in accordance with the present invention. In case the surface to be treated is tooth enamel, dental etching techniques known in the art are preferably applied before the treatment with the surface treatment composition.

The use of the present invention preferably yields a treated surface having an oil contact angle under water of more than 80 degrees, more preferably of 90-155 degrees, most preferably of 110-150 degrees.

The treated surface obtained in accordance with the present use typically has an interfacial energy under water of 10-35 dynes/cm. More preferably, the treated surface has an interfacial energy under water of 20-30 dynes/cm, most preferably of 22-28 dynes/cm.

The invention is further illustrated by the following non-limiting examples.

## EXAMPLES

### Example 1

Surface roughened PDMS replica film was prepared as reported by Ghosh et al. (Surface Chemical Modification of Poly(dimethylsiloxane)-Based Biomimetic Materials: Oil-Repellent Surfaces; Appl. Mater. Interfaces (2009), 1(11), 2636-2644). This PDMS film was treated with an oxidizing mixture of hydrochloric acid (35%, 4 mL), hydrogen peroxide (30%, 4 mL) and water (8 mL) for 10 minutes. Next, the oxidized PDMS film was rinsed with distilled water and purged with nitrogen gas. The dry oxidised PDMS film was instantly submerged in a sol-gel mixture with the patterned surface facing the solution.

Silica nanoparticles (spherical, volume weighted average particle size 160 nm) were deposited onto the oxidized PDMS film. After drying, the silica modified PDMS film was treated with 5% (w/v) (3-Aminopropyl) trimethoxysilane (97% pure from Aldrich) in methanolic solution. Subsequently, the amine functionalized PDMS film was treated with epoxy functionalized polyglycol to produce a superoleophobic surface.

The epoxy functionalized polyglycol had previously been synthesized as follows: 5.0 g of polyalkylene glycol monoallyl ethers $[CH_2=CHCH_2(OCH_2CH_2)_n(OCH_2CH(CH_3))_mOH]$(1 equivalent), where n=19, m=5 was dissolved in 90 mL of toluene taken in a 100 mL two-necked dry round bottom flask attached to a Dean Stark apparatus which was connected to a water condenser. Nitrogen was continuously purged to the reaction mixture using a Schlenk line. The reaction mixture was stirred at 140°C for 3 h. After making the reaction mixture completely dry, the temperature of the system was brought down to 25°C. 0.639 g (1.5 equivalents) of 3-Chloroperbenzoic acid (MCPBA) was then added to the reaction mixture and was stirred at 25°C for about 60 h. The progress of the epoxidation reaction was monitored using thin layer chromatography. After completion of the reaction, the solvent was evaporated using a rotary evaporator and a yellow viscous liquid was obtained. The product was purified using 5% aqueous solution of $NaHCO_3$. The organic layer was washed with hexane-ethyl acetate (12:7 v/v ratios) solvent mixture. The solvent was evaporated under vacuum after treating it with sodium sulfate and a colorless viscous liquid was obtained.

The underwater static oil contact angles of the untreated PDMS film and the superoleophobic PDMS film were measured using captive bubble technique (and light liquid paraffin oil). The results are shown in Table 1.

**Table 1**

|  | underwater oil contact angle |
| --- | --- |
| Untreated PDMS film | 20° |
| Superoleophobic PDMS film | 145° |

## Claims

1. A surface treatment composition capable of imparting underwater superoleophobicity to surfaces, said composition containing functionalized micro/nanoparticles, said functionalized micro/nanoparticles comprising a core particle having a diameter in the range of 50-5,000 nm, said core particle carrying a plurality of covalently bound silane polymer residues on the surface, wherein these covalently bound silane polymer residues are represented by formula (I):

$$(-O)_a(R^1O)_b(R^2)_{3-a-b}Si-R^3-X-pol \qquad (I)$$

   wherein:

   $R^1$ and $R^2$ are each independently selected from hydrogen atom and optionally substituted $C_{1-20}$ alkyl;
   $R^3$ is selected from substituted and unsubstituted $C_{1-12}$ alkylenes;
   X is a selected from $NR^4$, O, S or P, wherein $R^4$ represent hydrogen atom or $C_{1-3}$ alkyl; pol is a hydrophilic polymer residue;
   a = 1, 2 or 3;

b = 0, 1 or 2; and

a+b ≤ 3

wherein the hydrophilic polymer residue is residue of a polymer selected from polyethylene glycol, polypropylene glycol, polyvinyl alcohol, polyacrylamide, polyoxazoline, polyethyleneimine, acrylic polymers, polyvinylpyrrolidone), polysaccharides, chitosan and copolymers thereof;

wherein the composition comprises 0.1 - 45 wt% of the functionalized micro/ nanoparticles; and wherein the composition is a toothpaste, tooth powder, mouthwash, hard surface cleaning composition, toilet cleaning composition or a household cleaning composition

2. Composition according to claim 1, wherein the hydrophilic polymer residue is a residue from a polymer selected from polyethylene glycol, polypropylene glycol and copolymers thereof.

3. Composition according to any one of the preceding claims, wherein the core particle is made of silica, calcium carbonate, zinc oxide, titanium dioxide, hydrotalcite or hydroxyapatite.

4. Composition according to any one of the preceding claims 1 to 3, wherein the composition is a paste, a gel, a liquid or a powder.

5. Compositions according to any one of the preceding claims 1 to 4, wherein the functionalized micro/nanoparticles are homogeneously dispersed throughout the composition.

6. Composition according to claim 5, wherein the composition is a toothpaste.

7. A composition as claimed in any one of the proceeding claims wherein the functionalized micro/nanoparticles are prepared using a method comprising:

• providing a core particle having a diameter in the range of 50-5,000 nm; and
• covalently binding reactive hydrophilic polymer to the core particle by means of a silane coupling agent to produce a core particle carrying a plurality of covalently bound silane polymer residues on the surface.

8. Composition according to claim 7, wherein the reactive hydrophilic polymer contains one or more reactive groups selected from hydroxyl, epoxy, thiol, vinyl and chlorohydroxy.

9. Composition according to claim 8, wherein the reactive group is epoxy.

10. Composition according to claim 7 to 9, wherein the silane coupling agent is represented by the following formula (II):

$$(R^1O)_i(R^2)_{3-i}Si-R^3-Y \qquad (II)$$

wherein:

$R^1$, $R^2$ and $R^3$ have the same meaning as in claim 1;
Y is a reactive group selected from vinyl, alkene, epoxy, amine and mercapto; and
i = 1, 2 or 3.

11. Composition according to claim 10, wherein the reactive group Y is an amine group, preferably a primary amine group.

12. Use of a surface treatment composition according to any one of preceding claims for imparting underwater superoleophobicity, for imparting stain repellency to a surface and/or for imparting antimicrobial properties to a surface, said use comprising treating said surface with the surface treatment composition.

**Patentansprüche**

1. Oberflächenbehandlungszusammensetzung, die Oberflächen Unterwassersuperoleophobizität verleihen kann, wobei die Zusammensetzung funktionalisierte Mikro/Nanopartikel enthält, die funktionalisierten Mikro/Nanopartikel ein Kernpartikel eines Durchmessers in dem Bereich von 50 - 5.000 nm umfassen, das Kernpartikel auf der Oberfläche eine Vielzahl von kovalent gebundenen Silanpolymerresten trägt, wobei diese kovalent gebundenen Silanpolymerreste durch die Formel (I)

$$(-O)_a(R^1O)_b(R^1)_{3-a-b}Si-R^3-X-pol \qquad (I)$$

dargestellt sind,
wobei:

$R^1$ und $R^2$ jeweils unabhängig voneinander unter Wasserstoffatom und optional substituiertem $C_1$-$C_{20}$-Alkyl ausgewählt sind;
$R^3$ unter substituierten und unsubstituierten $C_1$-$C_{12}$-Alkylenen ausgewählt ist;
X unter $NR^4$, O, S oder P ausgewählt ist, wobei $R^4$ ein Wasserstoffatom oder $C_1$-$C_3$-Alkyl darstellt;
pol ein hydrophiler Polymerrest ist;
a = 1, 2 oder 3;
b = 0, 1 oder 2; und
$a+b \leq 3$ ist,
wobei der hydrophile Polymerrest der Rest eines Polymers ist, ausgewählt unter Polyethylenglycol, Polypropylenglycol, Polyvinylalkohol, Polyacrylamid, Polyoxazolin, Polyethylenimin, Acrylpolymeren, Poly(vinylpyrrolidon), Polysacchariden, Chitosan und Copolymeren davon;
wobei die Zusammensetzung 0,1 - 45 Gew.-% der funktionalisierten Mikro/Nanopartikel umfasst und wobei die Zusammensetzung eine Zahnpasta, ein Zahnpulver, ein Mundwasser, eine Reinigungszusammensetzung für harte Oberflächen, eine Toilettenreinigungszusammensetzung oder eine Haushaltsreinigungszusammensetzung ist.

**2.** Zusammensetzung nach Anspruch 1, wobei der hydrophile Polymerrest ein Rest eines Polymers ist, ausgewählt unter Polyethylenglycol, Polypropylenglycol und Copolymeren davon.

**3.** Zusammensetzung nach irgendeinem der vorhergehenden Ansprüche, wobei das Kernpartikel aus Siliziumdioxid, Calciumcarbonat, Zinkoxid, Titandioxid, Hydrotalcit oder Hydroxyapatit hergestellt ist.

**4.** Zusammensetzung nach irgendeinem der vorhergehenden Ansprüchen 1 bis 3, wobei die Zusammensetzung eine Paste, ein Gel, eine Flüssigkeit oder ein Pulver ist.

**5.** Zusammensetzung nach irgendeinem der vorhergehenden Ansprüche 1 bis 4, wobei die funktionalisierten Mikro/Nanopartikel in der Zusammensetzung durchgehend homogen dispergiert sind.

**6.** Zusammensetzung nach Anspruch 5, wobei die Zusammensetzung eine Zahnpasta ist.

**7.** Zusammensetzung, wie in irgendeinem der vorhergehenden Ansprüche beansprucht, wobei die funktionalisierten Mikro/Nanopartikel unter Anwendung eines Verfahrens hergestellt werden, umfassend:

• Bereitstellen eines Kernpartikels mit einem Durchmesser in dem Bereich von 50 - 5.000 nm; und
• kovalentes Binden reaktiven hydrophilen Polymers an das Kernpartikel mittels eines Silankupplungsmittels, um ein Kernpartikel herzustellen, das auf der Oberfläche eine Vielzahl von kovalent gebundenen Silanpolymerresten trägt.

**8.** Zusammensetzung nach Anspruch 7, wobei das reaktive hydrophile Polymer eine oder mehrere reaktive Gruppen enthält, die unter Hydroxyl, Epoxy, Thiol, Vinyl und Chlorhydroxy ausgewählt sind.

**9.** Zusammensetzung nach Anspruch 8, wobei die reaktive Gruppe Epoxy ist.

**10.** Zusammensetzung nach Anspruch 7 bis 9, wobei das Silankupplungsmittel durch die folgende Formel (II)

$$(R^1O)_i(R^2)_{3-i}Si-R^3-Y \qquad (II)$$

dargestellt ist,
wobei:

$R^1$, $R^2$ und $R^3$ die gleiche Bedeutung wie im Anspruch 1 haben;

Y eine reaktive Gruppe ist, ausgewählt unter Vinyl, Alken, Epoxy, Amin und Mercapto; und
i = 1, 2 oder 3 ist.

**11.** Zusammensetzung nach Anspruch 10, wobei die reaktive Gruppe Y eine Amingruppe ist, vorzugsweise eine primäre Amingruppe.

**12.** Verwendung einer Oberflächenbehandlungszusammensetzung nach irgendeinem der vorhergehenden Ansprüche, die einer Oberfläche Unterwassersuperoleophobizität, einer Oberfläche Schmutzabweisung und/oder einer Oberfläche antimikrobielle Eigenschaften verleiht, wobei diese Verwendung das Behandeln der Oberfläche mit der Oberflächenbehandlungszusammensetzung umfasst.

## Revendications

**1.** Composition de traitement de surface capable de communiquer une super oléophobicité sous l'eau à des surfaces, ladite composition contenant des micro/nanoparticules fonctionnalisées, lesdites micro/nanoparticules fonctionnalisées comprenant une particule de noyau ayant un diamètre dans l'intervalle de 50-5 000 nm, ladite particule de noyau portant plusieurs résidus polymères de silanes liés de manière covalente sur la surface, dans laquelle ces résidus polymères de silanes liés de manière covalente sont représentés par la formule (I) :

$$(-O)_a(R^1O)_b(R^2)_{3-a-b}Si-R^3-X-pol \qquad (I)$$

où :

$R^1$ et $R^2$ sont chacun indépendamment choisis parmi un atome d'hydrogène et un groupe alkyle en $C_{1-20}$ éventuellement substitué ;
$R^3$ est choisi parmi des alkylène en $C_{1-12}$ substitués et non substitués ;
X est choisi parmi $NR^4$, O, S ou P, où $R^4$ représente un atome d'hydrogène ou un groupe alkyle en $C_{1-3}$ ;
pol est un résidu polymère hydrophile ;
a = 1, 2 ou 3 ;
b = 0, 1 ou 2 ; et
$a+b \leq 3$
où le résidu polymère hydrophile est un résidu d'un polymère choisi parmi le polyéthylène glycol, polypropylène glycol, poly(alcool vinylique), polyacrylamide, polyoxazoline, polyéthylèneimine, polymères acryliques, poly(vinylpyrrolidone), polysaccharides, chitosane et copolymères de ceux-ci ;
où la composition comprend 0,1-45 % en masse des micro/nanoparticules fonctionnalisées ; et
où la composition est un dentifrice, une poudre pour les dents, une eau de bouche, une composition nettoyante de surface dure, une composition nettoyante de toilettes ou une composition nettoyante ménagère.

**2.** Composition selon la revendication 1, dans laquelle le résidu polymère hydrophile est un résidu d'un polymère choisi parmi le polyéthylène glycol, polypropylène glycol et des copolymères de ceux-ci.

**3.** Composition selon l'une quelconque des revendications précédentes, dans laquelle la particule de noyau est constituée de silice, carbonate de calcium, oxyde de zinc, dioxyde de titane, hydrotalcite ou hydroxyapatite.

**4.** Composition selon l'une quelconque des revendications 1 à 3 précédentes, où la composition est une pâte, un gel, un liquide ou une poudre.

**5.** Composition selon l'une quelconque des revendications 1 à 4 précédentes, où les micro/nanoparticules fonctionnalisées sont dispersées de manière homogène d'un bout à l'autre de la composition.

**6.** Composition selon la revendication 5, où la composition est un dentifrice.

**7.** Composition selon l'une quelconque des revendications précédentes, où les micro/nanoparticules fonctionnalisées sont préparées en utilisant un procédé comprenant :

• la fourniture d'une particule de noyau ayant un diamètre dans l'intervalle de 50-5 000 nm ; et
• la liaison covalente de polymère hydrophile réactif à la particule de noyau au moyen d'un agent de couplage de silane pour produire une particule de noyau portant plusieurs résidus polymères de silanes liés de manière covalente sur la surface.

8. Composition selon la revendication 7, où le polymère hydrophile réactif contient un ou plusieurs groupes réactifs choisis parmi un hydroxyle, époxy, thiol, vinyle et chlorohydroxy.

9. Composition selon la revendication 8, où le groupe réactif est un époxy.

10. Composition selon la revendication 7 à 9, où l'agent de couplage de silane est représenté par la formule (II) suivante :

$$(R^1O)_i(R^2)_{3-i}Si\text{-}R^3\text{-}Y \qquad (II)$$

où :

R$^1$, R$^2$ et R$^3$ ont la même signification que dans la revendication 1 ;
Y est un groupe réactif choisi parmi un vinyle, alcène, époxy, amine et mercapto ; et
i=1, 2 ou 3.

11. Composition selon la revendication 10, où le groupe réactif Y est un groupe amine, de préférence un groupe amine primaire.

12. Utilisation d'une composition de traitement de surface selon l'une quelconque des revendications précédentes pour communiquer une super oléophobicité sous l'eau, pour communiquer une répulsion aux taches à une surface et/ou pour communiquer des propriétés antimicrobiennes à une surface, ladite utilisation comprenant le traitement de ladite surface avec la composition de traitement de surface.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20080177022 A
- US 20100159256 A
- US 20110024292 A1, Armstrong
- US 2013296453 AA, Ciba
- US 20110084421 A1

### Non-patent literature cited in the description

- **GHOSH et al.** Surface Chemical Modification of Poly(dimethylsiloxane)-Based Biomimetic Materials: Oil-Repellent Surfaces. *Appl. Mater. Interfaces,* 2009, vol. 1 (11), 2636-2644
- **GHOSH et al.** Water-Based Layer-by-Layer Surface Chemical Modification of Biomimetic Materials: Oil Repellency. *Appl. Mater. Interfaces,* 2013, vol. 5 (18), 8869-8874